# FASCICULE DE BREVET EUROPEEN

(11) **EP 0 556 103 B1**
(45) Date de publication et mention de la délivrance du brevet: **16.10.1996**
(21) Numéro de dépôt: 93400301.3
(22) Date de dépôt: 05.02.1993
(51) Int. Cl.: C03B 23/03

(54) **Installation pour le bombage de vitrages**
Vorrichtung zum Biegen von Windschutzscheiben
Apparatus for bending windscreens

(30) Priorité: 10.02.1992 DE 4203751
(43) Date de publication de la demande: 18.08.1993
(73) Titulaire: SAINT-GOBAIN VITRAGE, F-92400 Courbevoie (FR); VEGLA Vereinigte Glaswerke GmbH, D-52066 Aachen (DE)
(72) Inventeur: Kuster, Hans-Werner, W-5100 Aachen (DE); Ollfisch, Karl-Josef, W-5100 Aachen (DE); Diederen, Werner, W-5120 Herzogenrath (DE)
(74) Mandataire: Menes, Catherine

(56) Documents cités:
- EP-A- 0 183 418
- EP-A- 0 229 337
- US-A- 4 741 751
- US-A- 5 004 491

## Description

La présente invention concerne une installation pour le bombage de vitrages, comportant un four continu destiné à réchauffer les vitrages à la température de bombage, un poste de bombage par pressage avec une forme inférieure et une forme supérieure aspirante, un plateau-ventouse déplaçable longitudinalement pour transporter les vitrages du transporteur du four continu dans le poste de bombage par pressage et un cadre annulaire de support déplaçable horizontalement pour transporter les vitrages bombés du poste de bombage par pressage dans un poste de refroidissement.

Des installations d'une telle structure sont par exemple décrites dans les documents EP-B1-0 229 337 et US-A-4 741 751. Dans ces installations connues, lors de l'introduction du vitrage dans la presse de bombage, le plateau-ventouse se déplace entre les formes de pressage ouvertes de la presse de bombage montée fixe. Il en résulte un cycle de production relativement long car le vitrage suivant ne peut être introduit dans le poste de bombage que lorsque le cadre de support portant le vitrage bombé a quitté le poste de bombage.

Des installations du type précité présentant, par contre, un cycle de production raccourci, sont connues d'après les documents EP-A-0 183 418 et US-A-5 004 491. Dans ces installations connues, la forme de bombage inférieure de la presse est chaque fois conçue déplaçable et, entre le poste de bombage par pressage et le transporteur à rouleaux, est prévu un poste de transfert supplémentaire dans lequel le vitrage à bomber est transféré du plateau-ventouse sur la forme inférieure de bombage. Pendant que s'effectue ce transport, le vitrage précédent, déjà bombé, est, simultanément, déposé sur un cadre depuis la forme supérieure aspirante, pour sa part montée fixe. Lorsque le cadre annulaire de transport se déplace dans le poste de refroidissement, la forme inférieure de bombage sur laquelle le vitrage suivant est posé se déplace simultanément dans le poste de bombage par pressage.

Dans le cas de l'installation connue d'après le document EP-0 183 418, la forme inférieure est conçue comme un moule de bombage concave, tandis que, dans le cas du document US-PS-5 004 491, elle est conçue comme un moule de bombage convexe. Dans les deux cas, le vitrage est déposé par le plateau-ventouse, à plat, sur la forme inférieure qu'il ne touche forcément qu'aux points les plus hauts de la surface de moulage. Du fait de cette position relativement instable avant l'opération de bombage, aucune force d'accélération et de freinage importante ne peut être exercée sur le moule de bombage pendant le transport du vitrage dans le poste de bombage à l'aide de la forme inférieure, de sorte que cette opération de transport ne peut être effectuée qu'à une vitesse modérée. Pour cette raison, le gain en temps de cycle de production est relativement faible par rapport aux installations connues citées en premier lieu.

L'invention a pour but de développer une installation du type spécifié d'une manière telle que le cycle de production puisse être à nouveau raccourci par rapport aux solutions connues sans nuire à la qualité des vitrages bombés et qu'ainsi la rentabilité de l'installation soit dans l'ensemble accrue d'autant.

Ce but est atteint selon l'invention par une installation pour le bombage de vitrages, comportant un four continu destiné à réchauffer les vitrages à la température de bombage, un poste de bombage par pressage avec une forme inférieure de bombage et une forme supérieure aspirante, un plateau-ventouse déplaçable longitudinalement pour transporter les vitrages du transporteur du four continu dans le poste de bombage par pressage et un cadre annulaire de support déplaçable horizontalement pour transporter les vitrages bombés du poste de bombage par pressage dans un poste de refroidissement. Selon l'invention cette installation est telle que la forme inférieure de bombage est montée fixe en aval du transporteur du four continu, qu'un poste de transfert est prévu pour transférer les vitrages bombés du moule de bombage aspirant supérieur sur le cadre annulaire de support entre le poste de bombage par pressage et le poste de refroidissement et que le moule de bombage aspirant supérieur est déplaçable entre le poste de bombage par pressage et le poste de transfert, en synchronisme avec le plateau-ventouse.

Dans le cas de l'installation conforme à l'invention, d'une part les deux opérations de transport, à savoir le transfert et le transport du vitrage plan depuis le transporteur sur la forme inférieure de bombage et ceux du vitrage bombé depuis la forme supérieure aspirante sur le cadre annulaire, s'effectuent en même temps, de sorte qu'un cycle de bombage ne contient aucune période de marche à vide. D'autre part, les deux opérations de transport peuvent être effectuées sous une accélération et un freinage élevés, donc à une vitesse élevée, sans nuire de quelque manière que ce soit aux vitrages chauds transportés, étant donné qu'ils s'appliquent chacun par la totalité de leur surface sur la surface aspirante correspondante du plateau-ventouse ou de la forme supérieure aspirante. De cette façon, le cycle de bombage peut, dans son ensemble, être raccourci davantage et la rentabilité de l'installation peut dès lors encore être accrue.

Selon une première forme de réalisation de l'invention, le plateau-ventouse et la forme supérieure aspirante sont montés sur des chariots séparés, mis en mouvement et commandés indépendamment l'un de l'autre. Selon une autre forme de réalisation particulièrement simple et avantageuse, le plateau-ventouse et la forme supérieure aspirante sont solidarisés par couplage et pourvus d'un entraînement commun. Dans ce but, ils peuvent être montés sur un chariot commun, de sorte qu'ils sont couplés de force et ne peuvent être déplacés qu'ensemble de façon synchrone.

La forme inférieure, non déplaçable longitudinalement, est avantageusement déplaçable verticalement, tandis que la forme supérieure aspirante est montée sur son chariot mobile longitudinalement mais non verticalement.

De plus, le cadre annulaire de support, mobile longitudinalement, est avantageusement également monté mobile dans le sens vertical dans le poste de transfert afin que, lors du transfert du vitrage bombé de la forme supérieure sur le cadre annulaire, ce dernier puisse être soulevé tout contre le dessous de la forme supérieure, dès que cette dernière a atteint sa position extrême dans le poste de transfert.

La forme inférieure peut être concave - et est alors de préférence du type moule annulaire concave ou convexe - et dans ce cas de préférence du type moule à surface pleine convexe. A une forme inférieure du type cadre annulaire concave correspond une forme supérieure convexe à surface pleine. Dans le cas d'une configuration convexe de la forme inférieure, la forme supérieure peut être conçue comme un moule de bombage à surface pleine présentant des orifices d'aspiration correspondants, ou également sous la forme d'une cloche aspirante, c'est-à-dire essentiellement sous la forme d'un moule à aspiration à surface de bombage en forme de cadre.

Dans un développement de l'invention, entre le plateau-ventouse et le poste de transfert peuvent être prévus deux (ou plus) postes de bombage par pressage successifs comportant chacun une forme supérieure aspirante et une forme inférieure coopérant avec celle-ci et pouvant coulisser verticalement, chacun avec une configuration de surface de bombage modifiée par rapport aux moules de bombage précédents, les différents postes de bombage présentant ainsi des surfaces de moulage progressives en vue du bombage pas à pas des vitrages. De cette façon, pour des bombages plus prononcés, il est possible d'effectuer l'opération de bombage en plusieurs stades, tout en conservant la rentabilité élevée de l'installation. Un tel bombage par pressage effectué pas à pas peut être avantageux dans le cas de formes de vitrages complexes. Il est également avantageux pour fabriquer des vitrages présentant des bombages plus marqués à la périphérie, qui ne peuvent être fabriqués, dans le cas de procédés de bombage en un stade, qu'à l'aide de moules de bombage équipés d'ailes articulées rabattables. De tels moules articulés présentent des inconvénients spécifiques qui sont évités dans le cas du procédé pas à pas selon l'invention.

D'autres détails et caractéristiques avantageuses et perfectionnements appropriés de l'invention ressortiront des sous-revendications et de la description suivante de divers exemples de réalisation de l'invention donnée avec référence aux dessins annexés qui représentent :
* **figure 1** : une vue en coupe longitudinale d'une installation de bombage conforme à l'invention comportant une forme de bombage aspirante supérieure avec une surface de bombage convexe,
* **figure 2** : une vue en coupe transversale suivant la ligne II-II de la figure 1,
* **figure 3** : une vue en coupe longitudinale d'une installation de bombage comportant une forme de bombage inférieure à surface de bombage convexe et une forme supérieure aspirante du type d'une cloche aspirante,
* **figure 4** : une vue en coupe longitudinale d'une installation de bombage comportant deux postes de bombage par pressage successif pour un bombage en deux opérations successives.

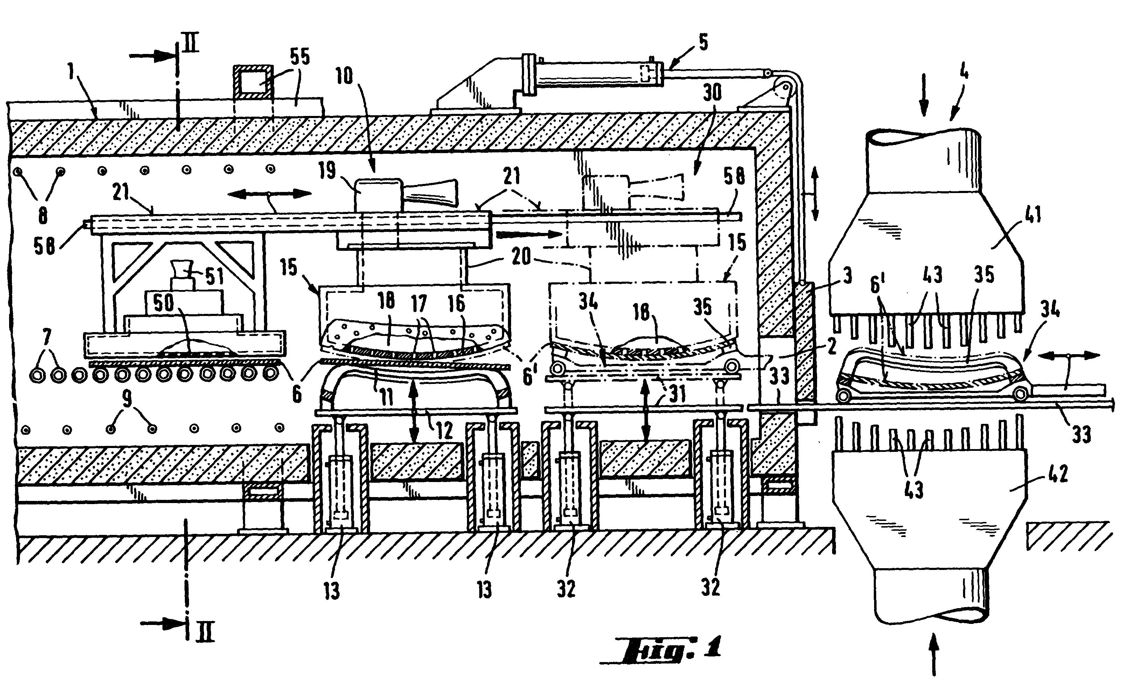

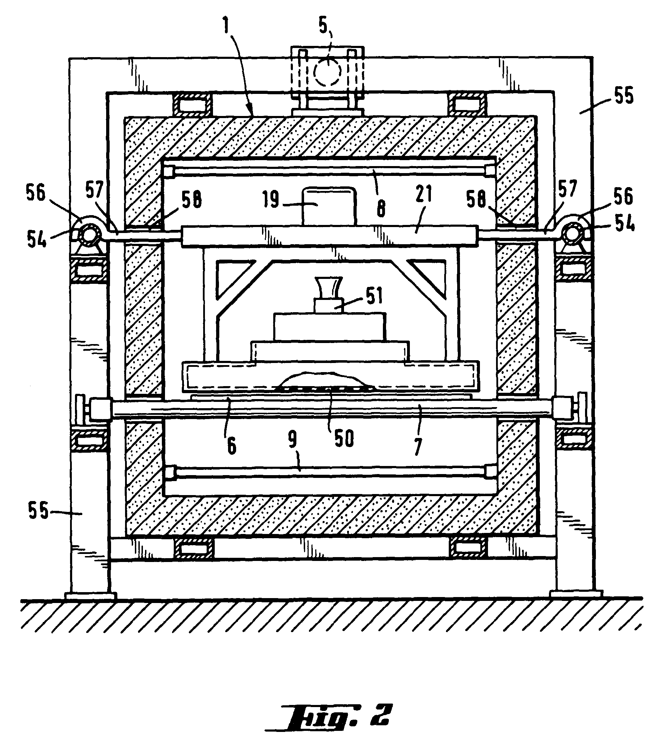

L'installation illustrée sur les figures 1 et 2 comprend un four 1 essentiellement fermé comportant une ouverture d'about 2 qui est fermée par une porte 3 et n'est ouverte que lorsque le vitrage bombé terminé est transféré du four 1 dans le poste de refroidissement 4. Ce poste de refroidissement 4 est par exemple un poste de trempe thermique. Un vérin de levage 5 est prévu pour actionner la porte 3. A l'intérieur du four 1, les vitrages 6 se trouvant sur un transporteur, formé de rouleaux transporteurs entraînés 7, sont réchauffés à leur température de bombage au moyen de dispositifs de chauffage électrique par rayonnement 8, 9.

Le transporteur est suivi immédiatement du poste de bombage par pressage 10. Dans le poste de bombage 10, la forme inférieure 11 est montée fixe sur un support 12 dans le sens vertical. Les mouvements de montée/baisse du support 12 avec la forme inférieure 11 s'effectuent à l'aide de vérins pneumatiques 13. La forme inférieure 11 est du type moule annulaire concave.

La forme supérieure 15 convexe, est constituée d'un moule à surface pleine dont la paroi convexe 16 est pourvue de perforations 17 en communication avec une chambre sous dépression 18. La mise en dépression de la chambre 18 s'effectue par l'intermédiaire d'un ventilateur aspirant 19 ayant la forme d'une trompe venturi. La forme supérieure aspirante 15 est fixée par l'intermédiaire d'un dispositif de retenue 20 approprié sur un chariot 21 pouvant se déplacer horizontalement.

Dans la direction de déplacement du chariot 21, derrière le poste de bombage par pressage, se trouve le poste de transfert 30 dans lequel des rails 31 sont montés coulissants dans le sens vertical. Les rails 31 sont élevés et abaissés au moyen de vérins pneumatiques 32. En position basse, ils se trouvent à la même hauteur que les rails 33 à l'extérieur du four 1. Sur les rails 31 et 33 est monté un chariot 34 qui porte le cadre annulaire de support 35 dont la configuration correspond à la forme périphérique du vitrage bombé.

A l'extérieur du four 1 se trouve le poste de refroidissement 4 qui, dans le cas représenté, a la forme d'un poste de trempe thermique et comporte un caisson de soufflage supérieur 41 et un caisson de soufflage inférieur 42. Les caissons de soufflage 41, 42 sont équipés chacun d'ajutages de soufflage 43 pour refroidir brusquement les vitrages bombés à des fins de trempe.

A l'extérieur de la forme supérieure de bombage 15, le plateau-ventouse plan 50 est monté rigidement sur le chariot 21. Le plateau-ventouse 50 comporte, comme la forme aspirante 15, une chambre qui peut être mise sous dépression à l'aide du ventilateur 51, pour soulever le vitrage 6 des rouleaux transporteurs 7 et le transférer dans le poste de bombage par pressage 10.

Le chariot 21 est, comme le montre clairement la figure 2, déplaçable sur des rails 54 montés à l'extérieur du four 1 proprement dit, sur la charpente 55 entourant le four 1, et les bras 57 portant les appuis 56 qui glissent sur les rails 54, traversent des fentes 58 dans les parois latérales du four 1 et s'entendent vers l'extérieur.

Le mode de fonctionnement de l'installation brièvement décrite est le suivant : lorsqu'un vitrage 6 chauffé à la température de bombage atteint l'extrémité du transporteur à rouleaux 7, le chariot 21 se trouve dans sa position de départ dans laquelle le plateau-ventouse plan 50 se trouve au-dessus du vitrage 6 et la forme aspirante 15 au-dessus de la forme de bombage inférieure 11. Tandis que le plateau-ventouse 50 soulève le vitrage 6 des rouleaux transporteurs 7 par activation du ventilateur 51, les vérins 13 et le ventilateur 19 sont simultanément actionnés. Du fait de l'action des vérins 13, la forme annulaire inférieure 11 - sur laquelle alors se trouve le vitrage précédent déposé lors du cycle de déplacement précédent du chariot 21 - est soulevée et est pressée contre la forme supérieure de bombage 15. Suite à la dépression qui s'établit dans la chambre 18, le vitrage bombé 6' s'applique complètement sur la surface de bombage de la paroi 16 et est maintenu dans cette position. La forme de bombage inférieure 11 est alors à nouveau abaissée par les vérins 13.

Lorsque, de cette façon, le vitrage plan 6 est maintenu par le plateau-ventouse 50 et le vitrage bombé 6' par la forme de bombage aspirante 15, l'entraînement du chariot 21 est activé et le chariot 21 se déplace vers son autre position extrême. Dans cette autre position extrême, où seule a été représentée (en traits discontinus) la forme de bombage aspirante 15, le plateau-ventouse 50 se trouve au-dessus de la forme de bombage inférieure 11 et la forme aspirante 15 se trouve dans le poste de transfert 30 dans lequel, à cet instant, le chariot 34 avec le cadre 35 se trouve sur les rails 31. Tandis que dans l'intérieur creux du plateau-ventouse 50 une brève surpression est produite, qui a pour effet de détacher le vitrage 6 du plateau-ventouse 50 et de le déposer sur la forme de bombage inférieure 11, par activation des vérins 32, le cadre 35 est soulevé et par une brève surpression dans la chambre 18, le vitrage bombé 6' est déposé sur le cadre 35. Tandis que le cadre 35 portant le vitrage bombé est à nouveau abaissé, puis transféré vers le poste de refroidissement 4, le chariot 21 revient dans sa position de départ et le cycle de bombage suivant peut débuter.

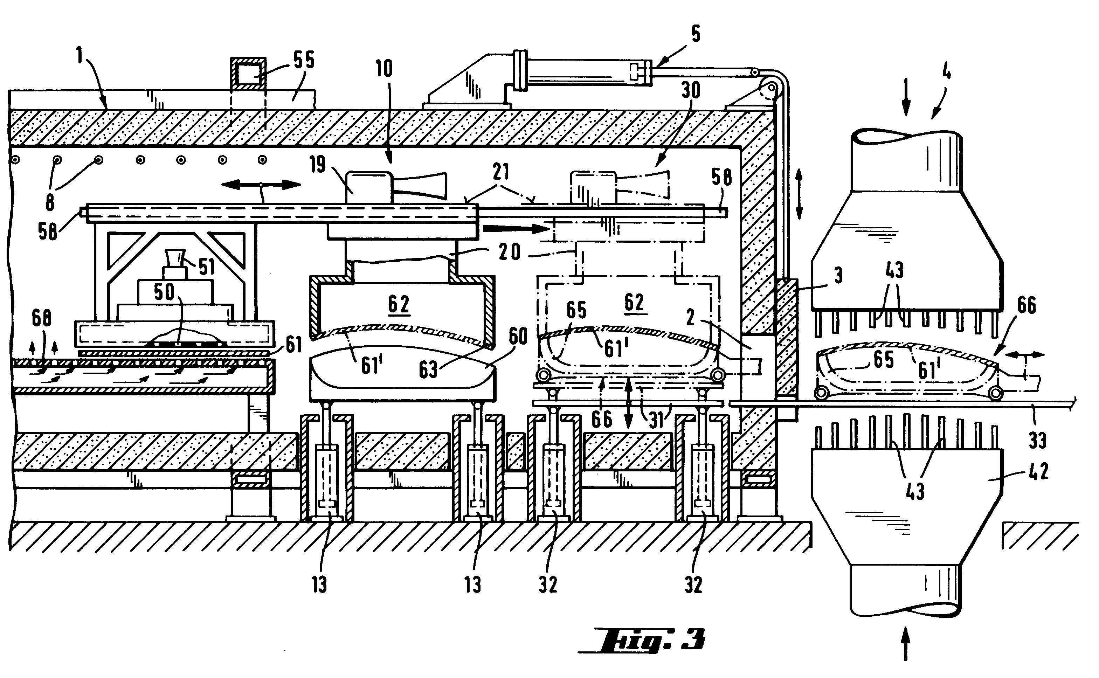

L'installation représentée sur la figure 3 est essentiellement similaire à l'installation déjà décrite à la différence que la forme inférieure 60 est cette fois constituée d'un moule de bombage à surface pleine convexe, c'est-à-dire bombée vers le haut et que la forme supérieure aspirante 62 a la forme d'une cloche aspirante dont la surface marginale inférieure 63 correspond à la forme nominale du vitrage bombé 61' et représente la contrepartie annulaire du moule à surface pleine 60. Le cadre annulaire 65, monté sur le chariot 66, est de même bombe vers le haut d'une manière convexe. De plus, dans l'exemple ici représenté, le transporteur n'est plus formé de rouleaux transporteurs, mais d'un coussin gazeux chaud 68 et les vitrages 61 sont transportés à travers le four, flottant sur le coussin gazeux 68. Le déroulement d'un cycle de bombage est pour le reste identique à celui décrit avec référence aux figures 1 et 2.

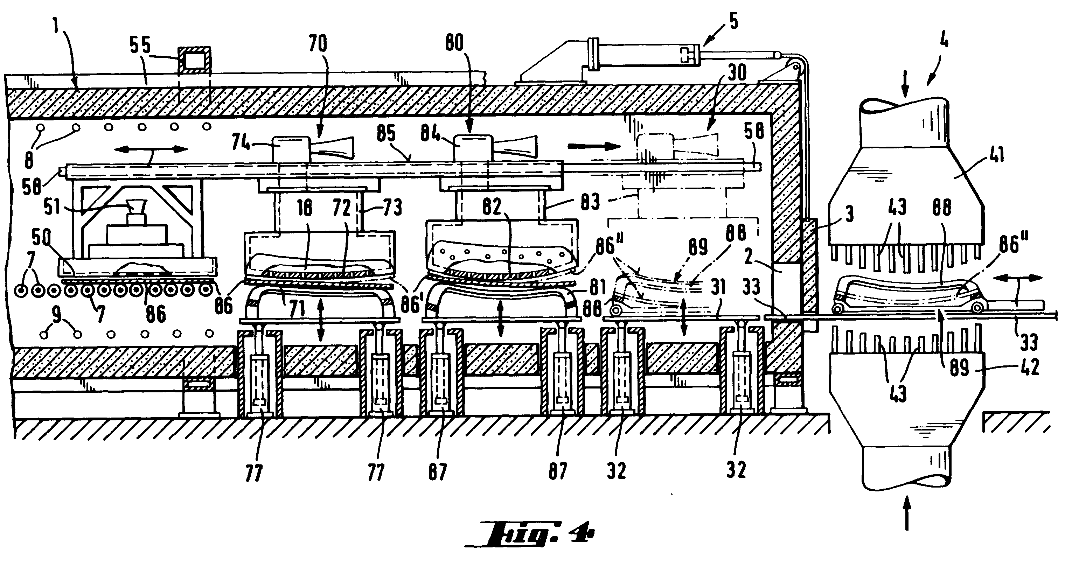

La figure 4 illustre une installation comportant deux postes de bombage successifs 70 et 80 dans lesquels les vitrages 86 sont bombés pas à pas. La forme inférieure de bombage 71 du poste de bombage 70 est du type moule annulaire concave. Il en est de même de la forme inférieure 81 du poste de bombage 80, tandis que les formes aspirantes supérieures 72 et 82, respectivement des postes de bombage 70 et 80, sont toutes deux du type moule convexe à surface pleine. Dans le poste de bombage 70, un bombage partiel 86' est communiqué aux vitrages encore plans 86 à l'aide des formes de bombage 71, 72, tandis que le façonnage final 86'' dans le poste de bombage 80 est effectue à l'aide des formes de bombage 81, 82. Les deux formes supérieures 72 et 82 sont montées par l'intermédiaire de fixations correspondantes 73, 83 sur un chariot commun 85 auquel le plateau-ventouse 50 est également fixé. La forme aspirante 82 est mise sous dépression à l'aide du ventilateur 74 et la forme aspirante 82 est mise sous dépression à l'aide d'un ventilateur 84. Pour transférer les vitrages bombés terminés dans le poste de refroidissement 4, on utilise le cadre annulaire concave 88 qui est monté sur le chariot 89 et qui peut être déplacé pour transférer les vitrages bombés terminés 86'' dans le poste de transfert 30.

Le chariot 85 se déplace à nouveau en alternance dans deux positions extrêmes. Dans la position extrême de gauche, le plateau-ventouse 50 reçoit le vitrage plan 86 chauffé à sa température de bombage des rouleaux transporteurs 7, les formes de bombage inférieures 71 et 81 sont soulevées simultanément par activation des vérins associés 77 et 87 et pressent les vitrages 86' et 86'' qui sont posés sur leurs surfaces contre les formes aspirantes supérieures associées 72, 82 contre lesquelles ils sont retenus par l'effet d'aspiration. Les deux formes de bombage inférieures 71 et 81 sont descendues et le chariot 85 se déplacent à présent vers la position extrême de droite. De cette façon, sont transférés simultanément, le vitrage plan 86 dans le poste de bombage 70, le vitrage 86' prébombé dans le poste de bombage 80, et le vitrage bombé terminé 86'' dans le poste de transfert 30 dans lequel se trouve à cet instant le cadre annulaire 88. Le plateau-ventouse 50 et les deux formes de bombage aspirantes 72 et 82 sont brièvement mises sous pression, grâce à quoi simultanément le vitrage plan 86 est déposé sur la forme inférieure 71, le vitrage prébombé 86' est déposé sur la forme inférieure 81 et le vitrage bombé terminé 86'' est déposé sur le cadre annulaire 88. Ensuite, le chariot 85 revient dans sa position de départ et le cycle suivant commence.

## Revendications

1. Installation pour le bombage de vitrages (6), comportant un four continu (1) destiné à réchauffer les vitrages à la température de bombage, un poste de bombage par pressage (10, 80) avec une forme inférieure de bombage (11, 60, 81) et une forme supérieure aspirantes (15, 62, 82), un plateau-ventouse (50) déplaçable longitudinalement pour transporter les vitrages du transporteur (7) du four continu dans le poste de bombage par pressage et un cadre annulaire de support (35, 65, 88) déplaçable horizontalement pour transporter les vitrages bombés du poste de bombage par pressage dans un poste de refroidissement (4), **caractérisé en ce que** la forme inférieure (11, 60, 81) du poste de bombage par pressage (10, 80) est montée fixe longitudinalement en aval du transporteur (7, 68) du four continu, qu'un poste de transfert (30) est prévu pour transférer les vitrages bombés (6') de la forme supérieure (15, 62, 82) sur le cadre annulaire (35, 65, 88) entre le poste de bombage par pressage (10, 80) et le poste de refroidissement (4) et que la forme supérieure aspirante (15, 62, 82) est déplaçable entre le poste de bombage par pressage (10, 80) et le poste de transfert (30) en synchronisme avec le plateau-ventouse (50).

2. Dispositif suivant la revendication 1, **caractérisé en ce que** le plateau-ventouse et la forme supérieure aspirante sont montés mobiles indépendamment l'un de l'autre et sont pourvus chacun d'un entraînement propre.

3. Dispositif suivant la revendication 1, **caractérisé en ce que** le plateau-ventouse (50) et la forme supérieure de bombage (15, 62, 82) sont solidarisés par couplage et pourvus d'un entraînement commun.

4. Dispositif suivant la revendication 3, **caractérisé en ce que** le plateau-ventouse (50) et la forme supérieure de bombage aspirante (15, 62, 82) sont montés sur un chariot commun (85).

5. Dispositif suivant l'une quelconque des revendications 1 à 4, **caractérisé en ce que** la forme inférieure (11, 60, 81) est mobile dans le sens vertical et la forme supérieure aspirante (15, 62, 82) est montée rigide dans le sens vertical.

6. Dispositif suivant l'une quelconque des revendications 1 à 5, **caractérisé en ce que** la forme supérieure (15, 82) a la forme d'un moule convexe à surface pleine et la forme de bombage inférieure (11, 81) la forme d'un moule annulaire.

7. Dispositif suivant l'une quelconque des revendications 1 à 5, **caractérisé en ce que** la forme aspirante supérieure (62) a la forme d'un moule annulaire en forme de cloche concave et la forme inférieure (60) la forme d'un moule de bombage à surface pleine convexe.

8. Dispositif suivant l'une quelconque des revendications 1 à 7, **caractérisé en ce que** le cadre annulaire déplaçable longitudinalement (35, 65, 88) est monté coulissant dans le sens vertical dans le poste de transfert (30).

9. Dispositif suivant l'une quelconque des revendications 1 à 8, **caractérisé en ce qu'**entre le plateau-ventouse (50) et le poste de transfert (30) sont prévus au moins deux postes de bombage par pressage successif (70, 80) comportant chacun une forme de bombage aspirante supérieure (72, 82) et une forme de bombage inférieure (71, 81) coopérant avec la première, les différents postes de bombage présentant des surfaces de moulage progressives, en vue du bombage pas à pas des vitrages (6).

## Patentansprüche

1. Vorrichtung zum Biegen von Glasscheiben (6), mit einem Durchlaufofen (1) zum Erwärmen der Glasscheiben auf Biegetemperatur, einer Preßbiegestation (10,80) mit einer unteren Biegeform (11,60,81) und einer oberen Saugbiegeform (15,62,82), einer horizontal verfahrbaren Saugplatte (50) zum Überführen der Glasscheiben von der Transportbahn (7)des Durchlaufofens in die Preßbiegestation und einem horizontal verfahrbaren Tragring (35,65,88) zum Überführen der gebogenen Glasscheiben von der Preßbiegestation in die Kühlstation (4), **dadurch gekennzeichnet**, daß die untere Biegeform (11,60,81) in der Preßbiegestation (10,80) im Anschluß an die Transportbahn (7,68) des Durchlaufofens stationär angeordnet, daß zum Überführen der gebogenen Glasscheiben (6') von der oberen Saugbiegeform (15,62,82) auf den Tragring (35,65,88) zwischen der Preßbiegestation (10,80) und der Kühlstation (4) eine Übergabestation (30) vorgesehen, und daß die obere Saugbiegeform (15,62,82) zwischen der Preßbiegestation (10,80) und der Übergabestation (30) synchron mit der Saugplatte (50) verfahrbar ist.

2. Vorrichtung nach Anspruch 1, dadurch gekennzeichnet, daß die Saugplatte und die Saugbiegeform unabhängig voneinander gelagert und jeweils mit einem eigenen Antrieb versehen sind.

3. Vorrichtung nach Anspruch 1, dadurch gekennzeichnet, daß die Saugplatte (50) und die Saugbiegeform (15,62,82) zwangsgekoppelt sind und mit einem gemeinsamen Antrieb versehen sind.

4. Vorrichtung nach Anspruch 3, dadurch gekennzeichnet, daß die Saugplatte (50) und die Saugbiegeform (15,62,82) an einem gemeinsamen Schlitten (85) angeordnet sind.

5. Vorrichtung nach einem der Ansprüche 1 bis 4, dadurch gekennzeichnet, daß die untere Biegeform (11,60,81) in der Preßbiegestation (10,70,80) in vertikaler Richtung verschiebbar, und die obere Saugbiegeform (15,62,82) in vertikaler Richtung starr angeordnet ist.

6. Vorrichtung nach einem der Ansprüche 1 bis 5, dadurch gekennzeichnet, daß die obere Saugbiegeform (15,82) als vollflächige konvexe Form, und die untere Biegeform (11,81) als Ringform ausgebildet ist.

7. Vorrichtung nach Anspruch 1 bis 5, dadurch gekennzeichnet, daß die obere Saugbiegeform (62) als konkave glockenförmige Ringform, und die untere Biegeform (60) als konvexe vollflächige Biegeform ausgebildet ist.

8. Vorrichtung nach einem der Ansprüche 1 bis 7, dadurch gekennzeichnet, daß der horizontal verfahrbare Tragring (35,65,88) in der Übergabestation (30) in vertikaler Richtung verschiebbar gelagert ist.

9. Vorrichtung nach einem oder mehreren der Ansprüche 1 bis 8, dadurch gekennzeichnet, daß zwischen der Saugplatte (50) und der Übergabestation (30) wenigstens zwei aufeinanderfolgende Preßbiegestationen (70,80) mit jeweils einer oberen Saugbiegeform (72,82) und einer mit dieser zusammenwirkenden unteren Biegeform (71,81) mit fortschreitender Formfläche zum schrittweisen Biegen der Glasscheiben (6) vorgesehen sind.

## Claims

1. Installation for bending glazings (6), incorporating a continuous furnace (1) for heating the glazings to the bending temperature, a pressing bending station (10, 80) with a lower bending form (11, 60, 81) and an upper suction form (15, 62, 82), a longitudinally displaceable suction pad (50) for conveying the glazings from the conveyor (7) of the continuous furnace into the pressing bending station and an annular, support frame (35, 65, 88), which is horizontally displaceable for conveying the bent glazings from the pressing bending station into a cooling station (4), characterized in that the lower form (11, 60, 81) of the pressing bending station (10, 80) is installed in longitudinally fixed manner downstream of the continuous furnace conveyor (7, 68), that a transfer station (30) is provided for transferring the bent glazing (6') from the upper form (15, 62, 82) on the annular frame (35, 65, 88) between the pressing bending station (10, 80) and the cooling station (4) and that the upper, suction form (15, 62, 82) is displaceable between the pressing bending station (10, 80) and the transfer station (30) synchronously with the suction pad (50).

2. Installation according to claim 1, characterized in that the suction pad and the upper, suction form are fitted so as to move independently of one another and each is provided with its own drive.

3. Installation according to claim 1, characterized in that the suction pad (50) and the upper bending form (15, 62, 82) are joined by coupling and provided with a common drive.

4. Installation according to claim 3, characterized in that the suction pad (50) and upper, suction bending form (15, 62, 82) are installed on a common carriage (85).

5. Installation according to any one of the claims 1 to 4, characterized in that the lower form (11, 60, 81) moves in the vertical direction and the upper, suction form (15, 62, 82) is fitted in rigid manner in the vertical direction.

6. Installation according to any one of the claims 1 to 5, characterized in that the upper form (15, 82) is in the form of a solid surface, convex mould and the lower bending form (11, 81) is in the form of an annular mould.

7. Installation according to any one of the claims 1 to 5, characterized in that the upper suction form (62) is in the form of an annular mould having a concave bell shape and the lower form (60) is in the form of a bending mould with a solid, convex surface.

8. Installation according to any one of the claims 1 to 7, characterized in that the longitudinally displaceable, annular frame (35, 65, 88) is fitted so as to slide vertically in the transfer station (30).

9. Installation according to any one of the claims 1 to 8, characterized in that between the suction pad (50) and the transfer station (30) there are at least two successive, pressing bending stations (70, 80), each having an upper, suction bending form (72, 82) and a lower bending form (71, 81) cooperating with the former, the different bending stations having progressive moulding surfaces with a view to a stepwise bending of the glazings (6).
